# EUROPÄISCHE PATENTSCHRIFT

(11) **EP 2 748 053 B1**
(45) Veröffentlichungstag und Bekanntmachung des Hinweises auf die Patenterteilung: **20.01.2016**
(21) Anmeldenummer: 12758805.1
(22) Anmeldetag: 24.08.2012
(51) Int. Cl.: B62D 6/10, B62D 15/02, G01D 5/245

(54) **KOMBINIERTER LENKMOMENT-LENKWINKELSENSOR**
COMBINED STEERING TORQUE-STEERING ANGLE SENSOR
CAPTEUR COMBINÉ VISANT LE COUPLE DE BRAQUAGE ET L'ANGLE DE BRAQUAGE

(30) Priorität: 24.08.2011 DE 102011081500
(43) Veröffentlichungstag der Anmeldung: 02.07.2014
(73) Patentinhaber: Continental Teves AG&Co. Ohg, 60488 Frankfurt (DE)
(72) Erfinder: ACKER, Heinrich, 65824 Schwalbach (DE); ANTONI, Henrik, 63579 Freigericht (DE)
(86) Internationale Anmeldenummer: PCT/EP2012/066496
(87) Internationale Veröffentlichungsnummer: WO 2013/026921

(56) Entgegenhaltungen:
- EP-A1- 1 818 659
- EP-A2- 2 314 498
- WO-A2-2011/062438

## Beschreibung

Die Erfindung betrifft einen Lenkmoment-Lenkwinkelsensor gemäß Oberbegriff von Anspruch 1 bzw. einen kombinierten Lenkmoment-Lenkwinkelsensor sowie die Verwendung des Lenkmoment-Lenkwinkelsensors in dem Lenkungssystem eines Kraftfahrzeugs.

Aus der Druckschrift FR 2872896 A1 ist ein Drehmomentsensor bekannt, der den Differenzwinkel über einem Torsionsstab bzw. dessen Auslenkung erfasst. Dabei wird die Verschiebung eines radial magnetisierten Multipol-Permanentmagneten als Encoder relativ zu einem flussleitenden Zahnring als Stator gemessen. Abhängig von der relativen Winkelstellung zwischen magnetischem Encoder und Stator wird ein magnetischer Fluss beeinflusst und mittels einer Hallsonde gemessen. Aus DE 102004023801 ist eine Kombination aus Lenkwinkel- und Drehmomentsensor bekannt, allerdings werden hierbei kostenintensive und zusätzliche Komponenten benötigt.

Des Weiteren offenbart die EP2314498 A2 die Präambel des Anspruchs 1.

Der Erfindung liegt die Aufgabe zu Grunde, einen Lenkmoment-Lenkwinkelsensor vorzuschlagen, welcher kostengünstig und/oder kompakt ausgebildet ist.

Diese Aufgabe wird erfindungsgemäß gelöst durch den Lenkmoment-Lenkwinkelsensor gemäß Anspruch 1.

Der zweite Encoder ist bevorzugt als magnetischer Encoder ausgebildet und das dritte Sensorelement als Magnetfeldsensorelement, welches das Magnetfeld des zweiten magnetischen Encoders erfasst. Alternativ vorzugsweise sind der zweite Encoder und das dritte Sensorelement nach einem induktiven oder kapazitiven Messprinzip ausgebildet.

Es ist bevorzugt, dass der erste magnetische Encoder auf einem ersten drehbaren Wellenabschnitt angeordnet ist, der einen Getriebeabschnitt aufweist, insbesondere in Form einer außen umlaufenden Zahnung, mit welcher der erste Wellenabschnitt mit dem ersten magnetischen Encoder ein erstes Getrieberad ausbildet.

Es ist zweckmäßig, dass der erste magnetische Encoder mittels eines Verbindungselements, insbesondere aus Spritzguss, mit dem ersten Wellenabschnitt verbunden ist. Dabei ist dieses Verbindungselement besonders bevorzugt Teil des ersten Getrieberades.

Der zweite magnetische Encoder ist bevorzugt auf einem zweiten Getrieberad angeordnet oder alternativ vorzugsweise in das zweite Getrieberad integriert, wobei das zweite Getrieberad mit dem ersten Getrieberad in Eingriff steht.

Es ist bevorzugt, dass das Lenkmomentsensormodul zur Messung eines an eine Welle angreifenden Drehmoments so ausgebildet ist, dass die Welle einen ersten Wellenabschnitt und einen zweiten Wellenabschnitt aufweist und diese beiden Wellenabschnitte gegeneinander verdrehbar sind, wobei auf dem ersten Wellenabschnitt der erste magnetische Encoder angeordnet ist und auf dem zweiten Wellenabschnitt ein Stator angeordnet ist, wobei der Stator zwei Statorelemente mit jeweils abragenden Fingern aufweist, wobei die Finger der beiden Statorelemente berührungslos ineinandergreifen, und den Statorelementen insbesondere jeweils oder gemeinsam ein Fluss-Konzentrator zugeordnet ist, welcher das zu erfassende, durch den ersten magnetischen Encoder erzeugte, magnetische Feld mindestens dem ersten Magnetfeldsensorelement direkt oder indirekt zuführt.

Die Finger der beiden Statorelemente zweckmäßigerweise axial bezüglich der Welle abragend ausgebildet. Dabei sind die Statorelement insbesondere so ausgebildet, dass die Finger gleichmäßig groß ausgebildet sind und äquidistant angeordnet sind auf einer im Wesentlichen kreisförmigen Linie. Besonders bevorzugt sind die Finger jeweils von ihrer Wurzel zu ihren Spitzen verjüngend bzw. schmaler werdend ausgebildet, ganz besonders bevorzugt mit trapezförmiger Grundfläche.

Es ist bevorzugt, dass das Lenkwinkelsensormodul so ausgebildet ist, dass es den Lenkwinkel mittels des Noniusprinzips erfasst.

Es ist zweckmäßig, dass das Lenkwinkelsensormodul zur Messung des Drehwinkels der Welle mit einem definierten Drehwinkelmessbereich, von insbesondere mehr als 360°, so ausgebildet ist, dass das erste Getrieberad und der erste magnetische Encoder, aufweisend wenigstens eine Encoderspur, die mehrere Polpaare aufweist, sich mit der Welle drehen, wobei das zweite Getrieberad sich mit dem zweiten magnetischen Encoder gemeinsam dreht und das erste und das zweite Getrieberad zueinander im Eingriff stehen, wobei zur Winkelerfassung dem ersten magnetischen Encoder das zweite Magnetfeldsensorelement und dem zweiten magnetischen Encoder das dritte Magnetfeldsensorelement zugeordnet sind, wobei
das erste und zweite Getrieberad bezüglich ihres gemeinsamen Übersetzungsverhältnisses und der erste und zweite magnetische Encoder bezüglich ihrer Pol-Anzahlen so ausgebildet sind, dass das dem ersten oder zweiten magnetischen Encoder hinsichtlich der Winkelerfassung zugeordnete Magnetfeldsensorelement, bezogen auf den gesamten Drehwinkelmessbereich der Winkelsensoranordnung n Pole oder Polpaare erfasst und das dem zweiten oder ersten magnetischen Encoder hinsichtlich der Winkelerfassung zugeordnete Magnetfeldsensorelement bezogen auf den gesamten Drehwinkelmessbereich der Winkelsensoranordnung n-1+Δ Pole oder Polpaare erfasst, wobei Δ als reelle Zahl zwischen 0 und 1 definiert ist und n als natürliche Zahl definiert ist.

Es ist bevorzugt, dass das erste und das zweite Getrieberad bezüglich ihres gemeinsamen Übersetzungsverhältnisses und der erste und zweite magnetische Encoder bezüglich ihrer Pol-/Polpaar-Anzahlen so ausgebildet, dass Δ ein Wert größer als 0 und kleiner als 0,5, insbesondere ein Wert größer 0 und kleiner 0,04, zugeordnet ist.

Das erste und zweite Getrieberad sind vorzugsweise beide als Zahnräder ausgebildet.

Es ist bevorzugt, dass das erste Getrieberad und das Verbindungselement des ersten magnetischen Encoders zu einem Bauteil vereinigt sind.

Der erste und zweite magnetische Encoder umfassen vorzugsweise jeweils wenigstens eine permanentmagnetisch ausgebildete und magnetisierte Encoderspur, welche alternierend magnetisierte magnetische Pole umfasst, welche besonders bevorzugt im Wesentlichen auf einer Kreislinie angeordnet sind.

Vorzugsweise wird aus den Informationen bzw. Ausgangssignalen der Magnetfeldsensorelemente unter Verwendung eines Nonius- Algorithmus bzw. Noniusprinzips eine absolute Winkelinformation berechnet. Hierzu umfasst der Lenkmoment-Lenkwinkelsensor besonders bevorzugt eine Signalverarbeitungseinrichtung.

Es ist zweckmäßig, dass das zweite Magnetfeldsensorelement zur Messung am ersten magnetischen Encoder in radialer oder alternativ vorzugsweise in axialer Richtung (stirnseitig) vor dem ersten magnetischen Encoder angeordnet ist.

Unter einem Fluss-Konzentrator wird bevorzugt ein Kollektor bzw. ein Kollektorblech verstanden.

Der erste und der zweite Wellenabschnitt sind bevorzugt mittels eines Torsionsstabes miteinander verbunden bzw. direkt oder indirekt miteinander und gegeneinander verdrehbar gekoppelt.

Vorzugsweise sind die beiden Wellenabschnitte jeweils in Form von auf der Welle oder auf dem Torsionsstab befestigten Hülsen ausgebildet.

Die Statorelemente und der zumindest eine Fluss-Konzentrator sind zweckmäßigerweise zumindest teilweise aus weichmagnetischem Material ausgebildet. Dabei werden die Statorelemente besonders bevorzugt zumindest teilweise durch das vom ersten magnetischen Encoder erzeugte Magnetfeld durchdrungen und führen den magnetischen Fluss.

Unter einem Magnetfeldsensorelement wird bevorzugt ein magneto-elektrisches Wandlerelement, vorzugsweise ein Hallelement oder ein magnetoresistives Sensorelement, verstanden. Solch ein Magnetfeldsensorelement weist insbesondere eine integrierte, elektronische Signalverarbeitungsschaltung auf.

Der magnetische Encoder ist zweckmäßigerweise ein Encoderring und insbesondere einstückig und so ausgebildet, dass diesem beide Statorelemente zugeordnet sind. Alternativ vorzugsweise weist die Sensoranordnung zwei oder mehr auf dem ersten Wellenabschnitt nebeneinander angeordnete, magnetische Encoder bzw. Encoderringe auf. Der magnetische Encoder ist besonders bevorzugt alternierend magnetisiert bzw. ist ein Multipol-Encoder.

Die Statorelemente umfassen bevorzugt jeweils einen, insbesondere bezüglich der Wellenabschnitte, radial abragenden Ring. Dabei ist jedem Statorelement ein Fluss-Konzentrator oder ein gemeinsamer Fluss-Konzentrator zugeordnet. Besonders bevorzugt ist der Flusskonzentrator mit den beiden Ringen der Statorelemente jeweils über einen Luftspalt gekoppelt und so ausgebildet, dass er das vom Stator gelenkte magnetische Feld bzw. den entsprechenden magnetischen Fluss abnimmt und dem ersten Magnetfeldsensorelement zuführt.

Es ist bevorzugt, dass der erste magnetische Encoder als Multipolencoder und der zweite magnetische Encoder als Dipolencoder ausgebildet sind.

Das erste und zweite Getrieberad sind bezüglich ihres gemeinsamen Übersetzungsverhältnisses und der erste und zweite magnetische Encoder sind bezüglich ihrer Pol- oder Polpaar-Anzahlen zweckmäßigerweise so ausgebildet, dass n ein Wert zwischen 8 und 60, und insbesondere ein Wert zwischen 14 und 40, zugeordnet ist.

Unter einem Stator wird vorzugweise ein magnetflussleitender Geber verstanden, welcher zweckmäßigerweise statisch auf einem der beiden Wellenabschnitte angeordnet ist und dem ersten magnetischen Encoder zugeordnet ist. Dabei ist der Stator alternativ vorzugsweise so ausgebildet, dass er drehbar auslenkbar angeordnet ist.

Der Stator und der optionale Fluss-Konzentrator sind zweckmäßigerweise aus weichmagnetischem Material ausgebildet. Die Erfindung bezieht sich außerdem auf die Verwendung des Lenkmoment-Lenkwinkelsensors in einem Lenkungssystem eines Kraftfahrzeugs.

### Bezugszeichenliste

- 1: erster magnetischer Encoder
- 2: erster Wellenabschnitt bzw. Trägerhülse
- 3: Verbindungselement (inkl. Zahnradausführung)
- 4: erstes Magnetfeldsensorelement (Lenkmomentsensormodul)
- 5: zweites Magnetfeldsensorelement (Lenkwinkelsensormodul)
- 6: drittes Magnetfeldsensorelement (Lenkwinkelsensormodul)
- 7: zweiter magnetischer Encoder
- 8: erstes Getrieberad
- 9: umlaufende Zahnung des ersten Wellenabschnitts

- 10: zweites Getrieberad
- 11: Stator
- 12: zwei Statorelemente
- 13: Finger der Statorelemente
- 14: Fluss-Konzentrator
- 15: Leiterplatte bzw. PCB ("Printed Circuit Board")
- 16: zweiter Wellenabschnitt
- 17: Statorelement-Verbindungselement
- 18: Ringe der Statorelemente

Es zeigen in schematischer Darstellung
- Fig. 1: ein Ausführungsbeispiel des erfindungsgemäßen kombinierten Lenkmoment-Lenkwinkelsensors in schematisierter Schnittdarstellung sowie
- Fig. 2: einen beispielhaft ausgebildeten Stator.

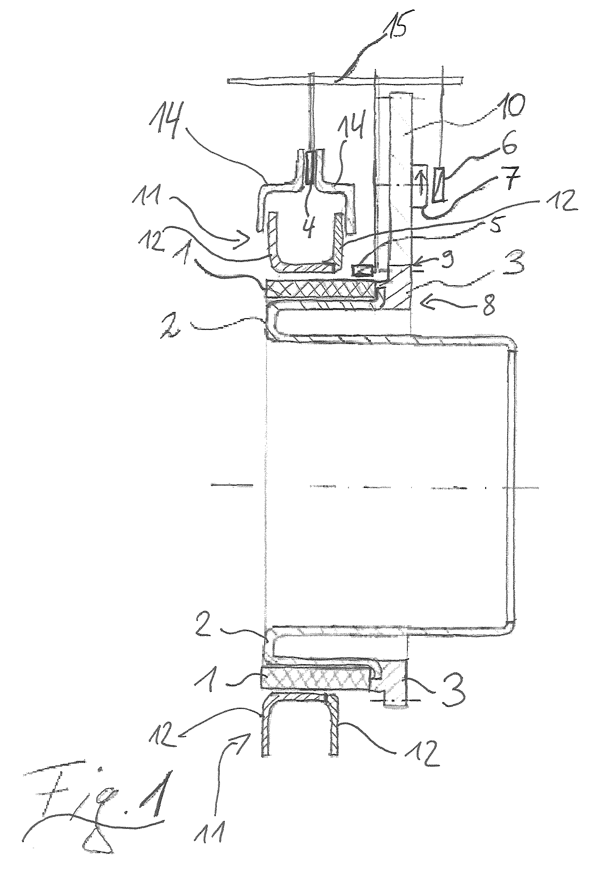

Fig. 1 zeigt den Schnitt eines beispielhaften Lenkmoment-Lenkwinkelsensors bestehend aus einem ersten magnetischen Encoder 1, der mit einer Trägerhülse als erstem Wellenabschnitt 2 durch ein Verbindungselement 3 verbunden ist.

Bezogen auf das Lenkmomentsensormodul wird das Magnetfeld des ersten magnetischen Encoders 1 durch Stator 11 im Sinne einer Differenzwinkelmessung zwischen Stator 11 und Encoder 1 beeinflusst. Stator 11 umfasst zwei Statorelemente 12 mit jeweils abragenden Fingern , wobei die Finger der beiden Statorelemente berührungslos ineinandergreifen, und den Statorelementen jeweils ein Fluss-Konzentrator 14 zugeordnet ist, welcher das zu erfassende, durch den ersten magnetischen Encoder 1 erzeugte, magnetische Feld dem ersten Magnetfeldsensorelement 4 berührungslos zuführt.

Erster magnetischer Encoder 1 ragt seitlich bzw. in axialer Richtung bezogen auf Wellenabschnitt 2 über den dem Stator 11 zugeordneten Bereich hinaus. Zweites Magnetfeldsensorelement 5 ist erstem Encoder 1 zusätzlich, radial beabstandet, zugeordnet. Mit diesem Aufbau lässt sich eine Winkelinformation im Bereich von 360°/Polpaarzahl messen. Zur absoluten Winkelmessung über mehrere Umdrehungen wird zusätzlich ein Getriebe, vorzugsweise ein Stirnradgetriebe benötigt, wodurch ebenfalls jeder eindeutige Messbereich erst ermöglicht wird, der den Bereich eines Polpaares übersteigt. Um dieses Getriebe relativ kostengünstig zu realisieren, wird mit dem Verbindungselement 3, neben der herkömmlichen Funktion, die Trägerhülse 2 und ersten magnetischen Encoder 1 zu verbinden, und Spannungen aus unterschiedlichen Temperatur- Ausdehnungsverhalten der beiden Elemente zu vermitteln, eine weitere Funktion realisiert. Durch Ausformen des Verbindungselements 3 mittels einer umlaufenden Zahnung 9 zu einem Zahnrad bzw. ersten Getrieberad ist der Primärteil des Getriebes, d.h. die antreibende Komponente der Getriebstufe, ebenfalls ohne zusätzliche Bauteile realisiert. Das Sekundärrad bzw. zweite Getrieberad, d.h. der angetriebenen Komponente der Getriebestufe, ist beispielgemäß als einfaches Zahnrad 10 ausgebildet, auf welchem ein zweiter magnetischer Encoder 7 angeordnet ist, der die übersetzte Winkelinformation bereitstellen kann. Diese weitere Winkelinformation wird durch ein drittes Magnetfeldsensorelement 6 gemessen bzw. erfasst. Alternativ kann die sekundäre Winkelinformation auch induktiv oder kapazitiv gemessen werden. Die elektrische Verbindung der Sensorelemente 4, 5, 6 ist beispielhaft mittels einer Leiterplatte 15 erfolgt. Aus den Informationen des zweiten und dritten Magnetfeldsensorelements 5, 6 wird mit Hilfe eines Nonius-Algorithmus der absolute Winkel über einen Messbereich von mehr als 360° in einer Signalverarbeitungsschaltung des Sensors berechnet.

Alternativ zu der in Fig. 1 dargestellten radialen Anordnung des zweiten Magnetfeldsensorelements 5 gegenüber magnetischem Encoder 1, wird eine axiale bzw. stirnseitige Anordnung des zweiten Magnetfeldsensorelements 5 gegenüber Encoder 1 vorgeschlagen.

Dabei kann, je nach Konstruktion, die oben beschriebene Verlängerung des ersten magnetischen Encoders 1 entfallen. In beiden Fällen beruht die kostengünstige Realisierung auf einer möglichst weitgehenden Mehrfachnutzung der bereits für den Differenzwinkelsensor zur Drehmomentmessung erforderlichen Teile, die nun ebenfalls zum Aufbau des absoluten Winkelsensors verwendet werden.

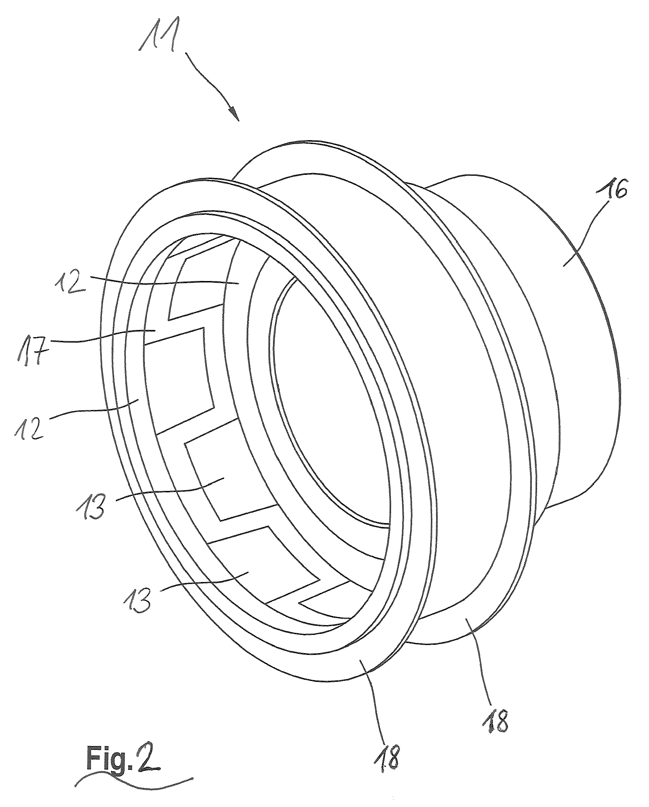

In Fig. 2 ist ein beispielhafter Stator 11 mit zwei Statorelementen 12 abgebildet, welcher ein Statorelement-Verbindungselement 17 aus Kunststoff beinhaltet, durch welches die beiden Statorelemente 12 fixiert werden. Statorelemente 12 sind beispielgemäß weichmagnetische, ferromagnetische Räder mit axial abragenden Fingern 13, die an jeweils einem zumindest auch radial ausgerichteten Ring 18 einstückig befestigt sind. Statorelemente 12 sind beispielhaft als Einlegeteile in einem gespritzten Kunststoffverbindungselement mit Buchse bzw. Hülse 16 als zweitem Wellenabschnitt eingebettet. Die Statorelemente 12 mit den jeweiligen Ringen 18 übertragen bzw. leiten das magnetische Feld, welches durch den nicht dargestellten magnetischen Encoder erzeugt wird. Das magnetische Feld wird dann beispielgemäß von den Ringen 18 über einen Luftspalt zu den nicht dargestellten Fluss-Konzentratoren übertragen.

## Patentansprüche

1. Lenkmoment-Lenkwinkelsensor umfassend ein Lenkmomentsensormodul und ein Lenkwinkelsensormodul, wobei das Lenkmomentsensormodul mit einem magnetischen Wirkprinzip arbeitet und dabei einen ersten magnetischen Encoder (1) und zumindest ein erstes Magnetfeldsensorelement (4) aufweist, **dadurch gekennzeichnet, dass**
das Lenkwinkelsensormodul zumindest ein zweites (5) Magnetfeldsensorelement und ein drittes Sensorelement (6) aufweist, wobei das zweite Magnetfeldsensorelement (5) das magnetische Feld des ersten magnetischen Encoders (1), also des magnetischen Encoders des Lenkmomentsensormoduls, direkt oder indirekt erfasst und wobei das dritte Sensorelement (6) einen zweiten Encoder (7) erfasst.

2. Lenkmoment-Lenkwinkelsensor nach Anspruch 1, **dadurch gekennzeichnet, dass** der zweite Encoder (7) ebenfalls als magnetischer Encoder ausgebildet ist und das dritte Sensorelement (6) ebenfalls als Magnetfeldsensorelement, welches das Magnetfeld des zweiten magnetischen Encoders (7) erfasst.

3. Lenkmoment-Lenkwinkelsensor nach Anspruch 1 oder 2, **dadurch gekennzeichnet, dass** der erste magnetische Encoder (1) auf einem ersten drehbaren Wellenabschnitt (2) angeordnet ist, der einen Getriebeabschnitt aufweist, insbesondere in Form einer außen umlaufenden Zahnung (9), mit welcher der erste Wellenabschnitt (2) mit dem ersten magnetischen Encoder (1) ein erstes Getrieberad (8) ausbildet.

4. Lenkmoment-Lenkwinkelsensor nach mindestens einem der Ansprüche 1 bis 3, **dadurch gekennzeichnet, dass** der erste magnetische Encoder (1) mittels eines Verbindungselements (3), insbesondere aus Spritzguss, mit dem ersten Wellenabschnitt (2) verbunden ist.

5. Lenkmoment-Lenkwinkelsensor nach Anspruch 4, **dadurch gekennzeichnet, dass** dieses Verbindungselement (3) Teil des ersten Getrieberades (8) ist.

6. Lenkmoment-Lenkwinkelsensor nach mindestens einem der Ansprüche 1 bis 5, **dadurch gekennzeichnet, dass** der zweite Encoder (7) auf einem zweiten Getrieberad (10) angeordnet ist, das mit dem ersten Getrieberad (8) in Eingriff steht.

7. Lenkmoment-Lenkwinkelsensor nach mindestens einem der Ansprüche 1 bis 6, **dadurch gekennzeichnet, dass** das Lenkmomentsensormodul zur Messung eines an eine Welle angreifenden Drehmoments so ausgebildet ist, dass die Welle einen ersten Wellenabschnitt (2) und einen zweiten Wellenabschnitt (16) aufweist und diese beiden Wellenabschnitte gegeneinander verdrehbar sind, wobei auf dem ersten Wellenabschnitt (2) der erste magnetische Encoder (1) angeordnet ist und auf dem zweiten Wellenabschnitt (16) ein Stator (11) angeordnet ist, wobei der Stator (11) zwei Statorelemente (12) mit jeweils abragenden Fingern (13) aufweist, wobei die Finger (13) der beiden Statorelemente (12) berührungslos ineinandergreifen, und den Statorelementen jeweils oder gemeinsam ein Fluss-Konzentrator (14) zugeordnet ist, welcher das zu erfassende, durch den ersten magnetischen Encoder (1) erzeugte, magnetische Feld mindestens dem ersten Magnetfeldsensorelement (4) direkt oder indirekt zuführt.

8. Lenkmoment-Lenkwinkelsensor nach mindestens einem der Ansprüche 1 bis 7, **dadurch gekennzeichnet, dass** das Lenkwinkelsensormodul so ausgebildet ist, dass es den Lenkwinkel mittels des Noniusprinzips erfasst.

9. Lenkmoment-Lenkwinkelsensor nach mindestens einem der Ansprüche 2 bis 8, **dadurch gekennzeichnet, dass** das Lenkwinkelsensormodul zur Messung des Drehwinkels der Welle mit einem definierten Drehwinkelmessbereich, von insbesondere mehr als 360°, so ausgebildet ist, dass das erste Getrieberad (8) und der erste magnetische Encoder (1), aufweisend wenigstens eine Encoderspur, die mehrere Polpaare aufweist, sich mit der Welle drehen, wobei das zweite Getrieberad (10) sich mit dem zweiten magnetischen Encoder (7) gemeinsam dreht und das erste (8) und das zweite (10) Getrieberad zueinander im Eingriff stehen, wobei
zur Winkelerfassung dem ersten magnetischen Encoder (1) das zweite Magnetfeldsensorelement (5) und dem zweiten magnetischen Encoder (7) das dritte Magnetfeldsensorelement (6) zugeordnet sind, wobei
das erste und zweite Getrieberad (8, 10) bezüglich ihres gemeinsamen Übersetzungsverhältnisses und der erste und zweite magnetische Encoder (1, 7) bezüglich ihrer Pol-Anzahlen so ausgebildet sind, dass das dem ersten magnetischen Encoder (1) hinsichtlich der Winkelerfassung zugeordnete zweite Magnetfeldsensorelement (5), bezogen auf den gesamten Drehwinkelmessbereich der Winkelsensoranordnung n Pole oder Polpaare erfasst und das dem zweiten magnetischen Encoder (7) zugeordnete dritte Magnetfeldsensorelement (6) bezogen auf den gesamten Drehwinkelmessbereich der Winkelsensoranordnung n-1+Δ Pole oder Polpaare erfasst, wobei Δ als reelle Zahl zwischen 0 und 1 definiert ist und n als natürliche Zahl definiert ist.

10. Lenkmoment-Lenkwinkelsensor nach Anspruch 9, **dadurch gekennzeichnet, dass** das erste und das zweite Getrieberad (8, 10) bezüglich ihres gemeinsamen Übersetzungsverhältnisses und der erste und zweite magnetische Encoder (1, 7) bezüglich ihrer Pol-/Polpaar-Anzahlen so ausgebildet, dass Δ ein Wert größer als 0 und kleiner als 0,5, insbesondere ein Wert größer 0 und kleiner 0,04, zugeordnet ist.

## Claims

1. Steering torque-steering angle sensor comprising a steering torque sensor module and a steering angle sensor module, wherein the steering torque sensor module operates with a magnetic principle of operation and thereby comprises a first magnetic encoder (1) and at least one first magnetic field sensor element (4), **characterized in that** the steering angle sensor module comprises at least one second (5) magnetic field sensor element and a third sensor element (6), wherein the second magnetic field sensor element (5) directly or indirectly records the magnetic field of the first magnetic encoder (1), i.e. of the magnetic encoder of the steering torque sensor module, and wherein the third sensor element (6) records a second encoder (7).

2. Steering torque-steering angle sensor according to Claim 1, **characterized in that** the second encoder (7) is likewise in the form of a magnetic encoder and the third sensor element (6) is likewise in the form of a magnetic field sensor element that records the magnetic field of the second magnetic encoder (7).

3. Steering torque-steering angle sensor according to Claim 1 or 2, **characterized in that** the first magnetic encoder (1) is disposed on a first rotatable shaft section (2), which comprises a gearbox section, especially in the form of outer circumferential teeth (9), with which the first shaft section (2) with the first magnetic encoder (1) forms a first gear wheel (8).

4. Steering torque-steering angle sensor according to any one of Claims 1 to 3, **characterized in that** the first magnetic encoder (1) is connected to the first shaft section (2) by means of a connecting element (3), especially an injection molded connecting element.

5. Steering torque-steering angle sensor according to Claim 4, **characterized in that** said connecting element (3) is part of the first gear wheel (8).

6. Steering torque-steering angle sensor according to at least one of Claims 1 to 5, **characterized in that** the second encoder (7) is disposed on a second gear wheel (10) that is engaged with the first gear wheel (8).

7. Steering torque-steering angle sensor according to least one of Claims 1 to 6, **characterized in that** the steering torque sensor module for measurement of a torque acting on a shaft is designed such that the shaft comprises a first shaft section (2) and a second shaft section (16) and said two shaft sections can be twisted relative to each other, wherein the first magnetic encoder (1) is disposed on the first shaft section (2) and a stator (11) is disposed on the second shaft section (16), wherein the stator (11) comprises two stator elements (12), each with projecting fingers (13), wherein the fingers (13) of the two stator elements (12) contactlessly mesh with each other, and a flux concentrator (14) is associated with each stator element or a common flux concentrator (14) is associated with the stator elements; the flux concentrator (14) directly or indirectly feeds the magnetic field to be detected and generated by the first magnetic encoder (1) to at least the first magnetic field sensor element (4).

8. Steering torque-steering angle sensor according to least one of Claims 1 to 7, **characterized in that** the steering angle sensor module is designed such that it records the steering angle using the Nonius principle.

9. Steering torque-steering angle sensor according to least one of Claims 2 to 8, **characterized in that** the steering angle sensor module for measurement of the angle of rotation of the shaft with a defined angle of rotation measurement range, especially of more than 360°, is designed such that the first gear wheel (8) and the first magnetic encoder (1), comprising at least one encoder track, which comprises a plurality of pairs of poles, rotate with the shaft, wherein the second gear wheel (10) rotates together with the second magnetic encoder (7) and the first (8) and the second (10) gear wheels are engaged with each other, wherein for angle recording the second magnetic field sensor element (5) is associated with the first magnetic encoder (1) and the third magnetic field sensor element (6) is associated with the second magnetic encoder (7), wherein the first and second gear wheels (8, 10) are designed in respect of their common transmission ratio and the first and second magnetic encoders (1, 7) are designed in respect of their numbers of poles such that the second magnetic field sensor element (5) associated with the first magnetic encoder (1) in relation to angle recording records n poles or pairs of poles in relation to the entire angle of rotation measurement range of the angle sensor arrangement and the third magnetic field sensor element (6) associated with the second magnetic encoder (7) detects n-l+Δ poles or pairs of poles in relation to the entire angle of rotation measurement range of the angle sensor arrangement, wherein Δ is defined as a real number between 0 and 1 and n is defined as a natural number.

10. Steering torque-steering angle sensor according to Claim 9, **characterized in that** the first and the second gear wheels (8, 10) are designed in respect of their common transmission ratio and the first and second magnetic encoders (1, 7) are designed in respect of their numbers of poles/pairs of poles such that Δ has an associated value greater than 0 and less than 0.5, especially a value greater than 0 and less than 0.04.

## Revendications

1. Capteur de couple de braquage et d'angle de braquage comprenant un module de capteur de couple de braquage et un module de capteur d'angle de braquage, le module de capteur de couple de braquage fonctionnant selon un principe de fonctionnement magnétique et présentant en l'occurrence un premier codeur magnétique (1) et au moins un premier élément de capteur de champ magnétique (4), **caractérisé en ce que**
le module de capteur d'angle de braquage présente au moins un deuxième élément de capteur de champ magnétique (5) et un troisième élément de capteur (6), le deuxième élément de capteur de champ magnétique (5) détectant directement ou indirectement le champ magnétique du premier codeur magnétique (1), c'est-à-dire du codeur magnétique du module de capteur de couple de braquage et le troisième élément de capteur (6) détectant un deuxième codeur (7).

2. Capteur de couple de braquage et d'angle de braquage selon la revendication 1, **caractérisé en ce que** le deuxième codeur (7) est réalisé également sous forme de codeur magnétique et le troisième élément de capteur (6) est également réalisé sous forme d'élément de capteur de champ magnétique qui détecte le champ magnétique du deuxième codeur magnétique (7).

3. Capteur de couple de braquage et d'angle de braquage selon la revendication 1 ou 2, **caractérisé en ce que** le premier codeur magnétique (1) est disposé sur une première portion d'arbre rotative (2) qui présente une portion de transmission, en particulier sous la forme d'une denture périphérique extérieure (9) avec laquelle la première portion d'arbre (2) constitue avec le premier codeur magnétique (1) une première roue de transmission (8).

4. Capteur de couple de braquage et d'angle de braquage selon au moins l'une quelconque des revendications 1 à 3, **caractérisé en ce que** le premier codeur magnétique (1) est connecté à la première portion d'arbre (2) au moyen d'un élément de connexion (3), en particulier moulé par injection.

5. Capteur de couple de braquage et d'angle de braquage selon la revendication 4, **caractérisé en ce que** cet élément de connexion (3) fait partie de la première roue de transmission (8).

6. Capteur de couple de braquage et d'angle de braquage selon au moins l'une quelconque des revendications 1 à 5, **caractérisé en ce que** le deuxième codeur (7) est disposé sur une deuxième roue de transmission (10) qui est en prise avec la première roue de transmission (8).

7. Capteur de couple de braquage et d'angle de braquage selon au moins l'une quelconque des revendications 1 à 6, **caractérisé en ce que** le module de capteur de couple de braquage est réalisé pour mesurer un couple s'appliquant à un arbre, de telle sorte que l'arbre présente une première portion d'arbre (2) et une deuxième portion d'arbre (16) et que ces deux portions d'arbre puissent tourner l'une par rapport à l'autre, le premier codeur magnétique (1) étant disposé sur la première portion d'arbre (2) et un stator (11) étant disposé sur la deuxième portion d'arbre (16), le stator (11) présentant deux éléments de stator (12) ayant chacun des doigts saillants (13), les doigts (13) des deux éléments de stator (12) s'engageant les uns dans les autres sans contact et un concentrateur de flux (14) étant associé à chaque fois ou en commun aux éléments de stator, lequel achemine directement ou indirectement le champ magnétique à détecter, produit par le premier codeur magnétique (1), au moins au premier élément de capteur de champ magnétique (4).

8. Capteur de couple de braquage et d'angle de braquage selon au moins l'une quelconque des revendications 1 à 7, **caractérisé en ce que** le module de capteur d'angle de braquage est réalisé de telle sorte qu'il détecte l'angle de braquage au moyen du principe de Nonius.

9. Capteur de couple de braquage et d'angle de braquage selon au moins l'une quelconque des revendications 2 à 8, **caractérisé en ce que** le module de capteur d'angle de braquage est réalisé pour mesurer l'angle de rotation de l'arbre avec une plage de mesure d'angle de rotation définie, notamment de plus de 360°, de telle sorte que la première roue de transmission (8) et le premier codeur magnétique (1), présentant au moins une trace de codeur qui présente plusieurs paires de pôles, tournent avec l'arbre, la deuxième roue de transmission (10) tournant conjointement avec le deuxième codeur magnétique (7) et la première (8) et la deuxième (10) roue de transmission étant en prise l'une avec l'autre,
le deuxième élément de capteur de champ magnétique (5) étant associé au premier codeur magnétique (1) et le troisième élément de capteur de champ magnétique (6) étant associé au deuxième codeur magnétique (7) pour la détection angulaire,
la première et la deuxième roue de transmission (8, 10), en termes de leur rapport de démultiplication commun, et le premier et le deuxième codeur magnétique (1, 7) en termes de leur nombre de pôles, étant réalisés de telle sorte que le deuxième élément de capteur de champ magnétique (5) associé au premier codeur magnétique (1) en ce qui concerne la détection angulaire, par rapport à la plage de mesure d'angle de rotation totale de l'agencement de capteur angulaire, détecte n pôles ou paires de pôles et que le troisième élément de capteur de champ magnétique (6) associé au deuxième codeur magnétique (7) en ce qui concerne la plage de mesure d'angle de rotation totale de l'agencement de capteur angulaire, détecte n-1+Δ pôles ou paires de pôles, Δ étant défini comme un nombre réel entre 0 et 1 et n étant défini comme un nombre naturel.

10. Capteur de couple de braquage et d'angle de braquage selon la revendication 9, **caractérisé en ce que** la première et la deuxième roue de transmission (8, 10), en ce qui concerne leur rapport de démultiplication commun, et le premier et le deuxième codeur magnétique (1, 7), en ce qui concerne leur nombre de pôles/paires de pôles, sont réalisés de telle sorte que Δ soit associé à une valeur supérieure à 0 et inférieure à 0,5, en particulier à une valeur supérieure à 0 et inférieure à 0,04.
